# EUROPÄISCHE PATENTSCHRIFT

(11) **EP 0 480 307 B1**
(45) Veröffentlichungstag und Bekanntmachung des Hinweises auf die Patenterteilung: **08.01.1997**
(21) Anmeldenummer: 91116851.6
(22) Anmeldetag: 02.10.1991
(51) Int. Cl.: C07F 9/38

(54) **Verfahren zur Herstellung von Acylaminomethanphosphonsäuren**
Process for the preparation of acylaminomethane phosphonic acids
Procédé de préparation d'acides acylaminométhane phosphoniques

(30) Priorität: 10.10.1990 DE 4032102
(43) Veröffentlichungstag der Anmeldung: 15.04.1992
(73) Patentinhaber: Hoechst Schering AgrEvo GmbH, 13509 Berlin (DE)
(72) Erfinder: Kleiner, Hans-Jerg, Dr., W-6242 Kronberg/Taunus (DE)

(56) Entgegenhaltungen:
- EP-A- 0 370 992
- US-A- 2 304 156
- US-A- 3 976 620

## Beschreibung

Acylaminomethanphosphonsäuren sind wertvolle Zwischenprodukte zur Herstellung von Aminomethanphosphonsäure, die technisches Interesse besitzt. Insbesondere sind sie auch geeignet als Zwischenprodukte zur Herstellung des herbizid wirkenden N-Phosphonomethylglycins durch Umsetzung mit Glyoxylsäure (siehe US-A-4851159). Bisher sind die Acylaminomethanphosphonsäuren beispielsweise durch Umsetzung von N-Hydroxymethylamiden mit Phosphortrichlorid und anschließender Hydrolyse unter Bildung von Salzsäure erhältlich (US-A-2304156; US-A-2328358). Ein besonderer Nachteil dieses Verfahrens besteht in der Bildung von Bischlormethylether als unerwünschtem Nebenprodukt, das als krebserzeugender Arbeitsstoff ausgewiesen ist. Bischlormethylether entsteht durch Umsetzung von Formaldehyd und Salzsäure im Hydrolyseschritt, wobei der Formaldehyd herstellungsbedingt in Spuren in den N-Hydroxymethylamiden enthalten ist. Die restlose Entfernung von Bischlormethylether erfordert aufwendige Reinigungsschritte. Es besteht somit die Aufgabe, ein Verfahren bereitzustellen, das die Bildung von Bischlormethylether ausschließt und industriell anwendbar ist.

Gegenstand der Erfindung ist ein Verfahren zur Herstellung von Verbindungen der Formel I, 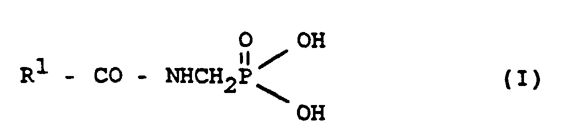 worin R¹ H, C₁-C₆-Alkyl, vorzugsweise C₁-C₃-Alkyl, Benzyl oder Phenyl, das unsubstituiert oder durch ein oder mehrere Reste aus der Gruppe C₁-C₄-Alkyl, C₁-C₄-Alkoxy und Halogen substituiert ist, bedeutet, dadurch gekennzeichnet, daß man Verbindungen der Formel II,

R¹ - CO - NH - CH₂ - OH (II)

worin R¹ die obengenannte Bedeutung hat, mit Diphosphortrioxid (P₂O₃) umsetzt und anschließend mit Wasser hydrolysiert.

Als Ausgangsverbindungen der Formel II kommen für das erfindungsgemäße Verfahren beispielsweise in Frage: N-Hydroxymethylformamid, N-Hydroxymethylacetamid und insbesondere N-Hydroxymethylbenzamid.

Die Verbindungen der Formel II können in reiner Form oder in situ hergestellt eingesetzt werden, z.B. als Rohprodukt hergestellt aus den entsprechenden Amiden und Paraformaldehyd, gegebenenfalls in einem Lösungsmittel wie Essigsäure.

Von besonderer Bedeutung für die Höhe der Ausbeute ist das Molverhältnis der Komponenten zueinander. Die Ausgangsstoffe N-Hydroxymethylamid der allgemeinen Formel II und P₂O₃ werden bevorzugt im Molverhältnis von höchstens 2:1, insbesondere im Molverhältnis von 2:1 bis 1,5:1 eingesetzt. Das Molverhältnis 2:1 ist in der Regel bevorzugt, wobei ein geringer Überschuß an P₂O₃ zweckmäßig sein kann.

Nach beendeter Umsetzung wird mit Wasser hydrolysiert, wobei ein Molverhältnis von Wasser zu eingesetztem P₂O₃ von mindestens 1:1 zweckmäßig ist. Ein Überschuß an Wasser ist möglich, vorzugsweise bis zu einem Molverhältnis Wasser zu P₂O₃ von 5:1. Wenn keine Hydrolyse mit Wasser erfolgt, dann sind die Endprodukte der Umsetzung Pyrophosphonsäuren der Formel III

R¹-CO-NH-CH₂-P(=O)(OH)-O-P(=O)(OH)-CH₂-NH-CO-R¹ (III)

Die Umsetzung von Verbindungen der Formel II und P₂O₃ wird vorzugsweise in einem organischen Lösungemittel durchgeführt.

Als organische Lösungsmittel kommen besonders unter den Reaktionsbedingungen inerte polare protische oder polare aprotische organische Lösungsmittel, wie Essigsäure, Acetonitril, Tetrahydrofuran und Dioxan in Frage. Bevorzugte Lösungsmittel sind Tetrahydrofuran und Essigsäure.

Das Verfahren wird zweckmäßig beispielsweise so durchgeführt, daß die Reaktionskomponente der Formel II und P₂O₃ im Temperaturbereich von 5 bis 60 °C gegebenenfalls unter Kühlung gemischt werden. Dabei ist die Reihenfolge der Zugabe der Komponenten nicht kritisch. Beispielsweise kann man zu der Lösung von P₂O₃ in einem organischen Lösungsmittel das N-Hydroxymethylamid der Formel II, gegebenenfalls gelöst in einem organischen Lösungsmittel, zudosieren. Die erhaltene Reaktionsmischung wird gegebenenfalls noch nachgerührt, z.B. im Temperaturbereich von 10 bis 60 °C, und dann auf eine Temperatur von 60 bis 200 °C, insbesondere 65 bis 150 °C erhitzt. Vorzugsweise wird dabei zum Rückfluß erhitzt, wobei zur Erhöhung der Reaktionstemperatur es sinnvoll sein kann, unter Druck zu arbeiten. Nach beendeter Umsetzung läßt man abkühlen und versetzt mit Wasser oder mit einem wasserhaltigen Gemisch, z.B. einem wasserhaltigen organischen Lösungsmittel. Zur Beschleunigung der einsetzenden Hydrolyse kann eine Temperaturerhöhung, beispielsweise bis zur Rückflußtemperatur, sinnvoll sein. Die Temperatur bei der Hydrolyse ist vorzugsweise von 10 bis 200 °C, insbesondere 60 bis 120 °C. Nach der Hydrolyse und Abkühlen der Reaktionsmischung kann das Produkt nach üblichen Methoden aufgearbeitet und weiter gereinigt werden. Zur Aufarbeitung wird beispielsweise das bei den vorherigen Umsetzungen gegebenenfalls zugesetzte organische Lösungsmittel zunächst entfernt, beispielsweise durch Destillation, gegebenenfalls unter reduzierten Druck. Das Reaktionsgut kann aber beispielsweise auch in kristallisierter Form vom organischen Lösungsmittel durch Absaugen getrennt werden. Die Rohprodukte können in einfacher Weise durch Kristallisation weiter gereinigt werden.

Das erfindungsgemäße Verfahren erlaubt die Herstellung von Acylaminomethanphosphonsäuren in hoher Ausbeute unter industriell einsetzbaren Bedingungen. Die Bildung von unerwünschtem Bischlormethylether wird vermieden.

### Beispiel 1

11 g (0,1 Mol) Diphosphortrioxid (P₂O₃) wurden in 70 ml Tetrahydrofuran gelöst und die Lösung auf 5 °C gekühlt. Nun wurden unter Rühren und unter Stickstoffatmosphäre 30,2 g (0,2 Mol) N-Hydroxymethylbenzamid in 30 Minuten portionsweise bei 5-10 °C zugegeben. Dann ließ man unter Rühren auf Raumtemperatur kommen und erhitzte anschließend 2 Stunden zum Rückfluß; dabei ergab sich keine klare Lösung. Nach Abkühlung auf Raumtemperatur wurden 4,5 g (0,25 Mol) Wasser bei 30-40 °C zugetropft und dann eine Stunde zum Rückfluß erhitzt. Anschließend wurde gekühlt, nachgerührt und abgesaugt. Man erhielt 28,5 g Benzoylaminomethanphosphonsäure mit einem Schmelzpunkt von 171 bis 173 °C. Aus der Mutterlauge wurden weitere 5 g isoliert. Insgesamt wurden damit 33,5 g (78 % der Theorie) Produkt erhalten.

### Beispiel 2

30,2 g (0,2 Mol) N-Hydroxymethylbenzamid wurden in 50 ml Tetrahydrofuran gelöst und unter Rühren auf 5 °C gekühlt, nun wurde eine Lösung von 11 g (0,1 Mol) Diphosphortrioxid (P₂O₃) in 20 ml Tetrahydrofuran bei 5-15 °C während 30 Minuten unter Stickstoffatmosphäre zugetropft. Die anfallende Reaktionslösung wurde nun für 10 Minuten auf 2 °C gekühlt. Dann ließ man die Kühlung weg, wobei die Innentemperatur bis auf 35 °C stieg. Dann wurde zwei Stunden zum Rückfluß erhitzt; dabei ergab sich keine klare Lösung. Dann wurde abgekühlt. Anschließend wurden 4,5 g (0,25 Mol) Wasser bei 30-35 °C unter Kühlung eingetropft. Dann wurde eine Stunde zum Rückfluß erhitzt, anschließend gekühlt und nachgerührt sowie schließlich abgesaugt. Man erhielt 25 g Benzoylaminomethanphosphonsäure mit einem Schmelzpunkt von 175 bis 178 °C. Aus der Mutterlauge wurden weitere 5,5 g isoliert. Insgesamt wurden damit 30,5 g (71 % der Theorie) Produkt erhalten.

### Beispiel 3

50 ml Essigsäure wurden unter Rühren und Stickstoffatmosphäre auf 10 °C gekühlt. Unter weiterer Kühlung wurden nun 11 g (0,1 Mol) Diphosphortrioxid (P₂O₃) eingetropft, dabei sank die Temperatur auf 0 bis 5 °C. Dann wurden 30,2 g (0,2 Mol) N-Hydroxymethylbenzamid während 60 Minuten portionsweise bei 5-10 °C zugegeben. Dann wurde ohne Kühlung gerührt, bis die Raumtemperatur erreicht war. Anschließend wurde 3 ½ Stunden zum Rückfluß erhitzt. Dann wurde abgekühlt. Nun wurden 2 g (0,11 Mol) Wasser unter Rühren eingetropft, wobei die Temperatur auf 35 °C stieg. Nun ließ man abkühlen und setzte 25 ml Aceton zu. Anschließend wurde nachgerührt und abgesaugt. Man erhielt 31,5 g Benzoylaminomethanphosphonsäure mit einem Schmelzpunkt von 165 bis 170 °C. Aus der Mutterlauge wurden weitere 2 g isoliert. Insgesamt wurden damit 33,5 g (78 % der Theorie) erhalten.

### Beispiel 4

20 g (0,225 Mol) N-Hydroxymethylacetamid wurden in 20 ml Essigsäure gelöst und unter Stickstoffatmosphäre und Rühren auf 5 °C gekühlt. Nun wurden 12,4 g (0,113 Mol) Diphosphortrioxid (P₂O₃) während 20 Minuten unter Rühren bei 5 bis 10 °C eingetropft. Dann wurde ohne Kühlung gerührt, bis die Raumtemperatur erreicht war. Anschließend wurde 3 ½ Stunden zum Rückfluß erhitzt. Dann wurde abgekühlt. Nun wurden 2 g (0,11 Mol) Wasser unter Rühren eingetropft, wobei die Temperatur auf 35 °C stieg. Nach dem Abkühlen wurde die Essigsäure unter reduziertem Druck und stetigem Erwärmen bis auf 95 °C entfernt. Der kristalline Rückstand wurde mit Ethanol digeriert. Man erhielt 26 g rohe Acetylaminomethanphosphonsäure mit einem Schmelzpunkt von 171-175 °C. Nach Umkristallisation aus 88 %iger wasserhaltiger Essigsäure wurden 19 g (55 % der Theorie) Acetylaminomethanphosphonsäure mit einem Schmelzpunkt von 186 bis 190 °C erhalten. Die CHNP-Elementaranalyse einer Probe ergab:

| | | | | | |
|---|---|---|---|---|---|
| C₃H₈NO₄P | ber.: | 23,53 % C | 5,23 % H | 9,15 % N | 20,26 % P |
| (153) | gef.: | 22,6 % C | 5,1 % H | 8,7 % N | 20,4 % P |

## Patentansprüche

1. Verfahren zur Herstellung von Verbindungen der Formel I, 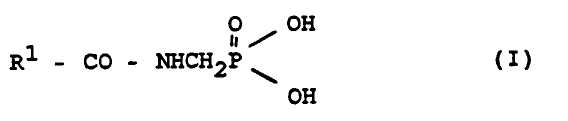 worin R¹ H, C₁-C₆-Alkyl, Benzyl oder Phenyl, das unsubstituiert oder durch ein oder mehrere Reste aus der Gruppe C₁-C₄-Alkyl, C₁-C₄-Alkoxy und Halogen substituiert ist, bedeutet, dadurch gekennzeichnet, daß man Verbindungen der Formel II,
R¹ - CO - NH - CH₂ - OH (II)
worin R¹ die obengenannte Bedeutung hat, mit Diphosphortrioxid (P₂O₃) umsetzt und anschließend mit Wasser hydrolysiert.

2. Verfahren nach Anspruch 1, dadurch gekennzeichnet, daß R¹ H, C₁-C₃-Alkyl, Benzyl oder Phenyl bedeutet.

3. Verfahren nach Anspruch 1, dadurch gekennzeichnet, daß R¹ Wasserstoff, Methyl, Ethyl oder Phenyl bedeutet.

4. Verfahren nach Anspruch 1, dadurch gekennzeichnet, daß R¹ Methyl bedeutet.

5. Verfahren nach Anspruch 1, dadurch gekennzeichnet, daß R¹ Phenyl bedeutet.

6. Verfahren nach einem oder mehreren der Ansprüche 1 bis 5, dadurch gekennzeichnet, daß die Verbindungen der Formeln II und P₂O₃ im Molverhältnis II:P₂O₃ von höchstens 2:1 umgesetzt werden.

7. Verfahren nach Anspruch 6, dadurch gekennzeichnet, daß das Molverhältnis von 2:1 bis 1,5:1 beträgt.

8. Verfahren nach einem oder mehreren der Ansprüche 1 bis 7, dadurch gekennzeichnet, daß die Reaktionstemperatur für die Umsetzung mit P₂O₃ 60 bis 200 °C beträgt.

9. Verfahren nach einem oder mehreren der Ansprüche 1 bis 8, dadurch gekennzeichnet, daß die Hydrolyse mit Wasser im Molverhältnis Wasser zu eingesetztem P₂O₃ von mindestens 1:1 und bei einer Temperatur von 10 bis 200 °C durchgeführt wird.

10. Verfahren nach einem oder mehreren der Ansprüche 1 bis 9, dadurch gekennzeichnet, daß die Umsetzung der Verbindungen der Formeln II und P₂O₃ in Gegenwart eines organischen Lösungsmittels durchgeführt wird.

11. Verfahren nach Anspruch 10, dadurch gekennzeichnet, daß das Lösungsmittel ein inertes polares protisches oder aprotisches organisches Lösungsmittel ist.

## Claims

1. A process for the preparation of a compound of the formula I 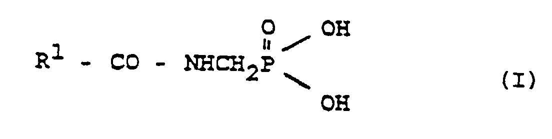 in which R¹ is H, C₁-C₆-alkyl, benzyl or phenyl, which is unsubstituted or substituted by one or more radicals from the group comprising C₁-C₄-alkyl, C₁-C₄-alkoxy and halogen, which comprises reacting a compound of the formula II
R¹ - CO - NH - CH₂ - OH (II)
in which R¹ has the abovementioned meaning, with diphosphorus trioxide (P₂O₃) and then hydrolyzing with water.

2. The process as claimed in claim 1, wherein R¹ is H, C₁-C₃-alkyl, benzyl or phenyl.

3. The process as claimed in claim 1, wherein R¹ is hydrogen, methyl, ethyl or phenyl.

4. The process as claimed in claim 1, wherein R¹ is methyl.

5. The process as claimed in claim 1, wherein R¹ is phenyl.

6. The process as claimed in one or more of claims 1 to 5, wherein the compound of the formula II and P₂O₃ are reacted in a molar ratio II:P₂O₃ of at most 2:1.

7. The process as claimed in claim 6, wherein the molar ratio is from 2:1 to 1.5:1.

8. The process as claimed in one or more of claims 1 to 7, wherein the reaction temperature for the reaction with P₂O₃ is 60 to 200°C.

9. The process as claimed in one or more of claims 1 to 8, wherein the hydrolysis is carried out with water in a molar ratio of water to P₂O₃ employed of at least 1:1 and at a temperature of 10 to 200°C.

10. The process as claimed in one or more of claims 1 to 9, wherein the reaction of the compound of the formula II and P₂O₃ is carried out in the presence of an organic solvent.

11. The process as claimed in claim 10, wherein the solvent is an inert polar protic or aprotic organic solvent.

## Revendications

1. Procédé pour la préparation de composés de formule I 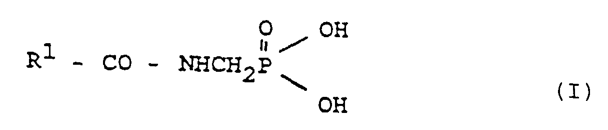 dans laquelle R¹ représente H, alkyle en C₁-C₆, benzyle ou phényle, qui est non substitué ou substitué par un ou plusieurs radicaux pris dans le groupe comportant alkyle en C₁-C₄, alcoxy en C₁-C₄ et halogènes, caractérisé en ce que l'on fait réagir des composés de formule II
R¹ - CO - NH - CH₂ - OH (II)
dans laquelle R¹ a la signification donnée ci-dessus, avec le trioxyde de diphosphore (P₂O₃) et ensuite on hydrolyse avec de l'eau.

2. Procédé selon la revendication 1, caractérisé en ce que R¹ représente H, alkyle en C₁-C₃, benzyle ou phényle.

3. Procédé selon la revendication 1, caractérisé en ce que R¹ représente l'hydrogène, méthyle, éthyle ou phényle.

4. Procédé selon la revendication 1, caractérisé en ce que R¹ représente méthyle.

5. Procédé selon la revendication 1, caractérisé en ce que R¹ représente phényle.

6. Procédé selon une ou plusieurs des revendications 1 à 5, caractérisé en ce que l'on fait réagir le composé de formule II et P₂O₃ dans un rapport en moles de P₂O₃ d'au maximum 2:1.

7. Procédé selon la revendication 6, caractérisé en ce que le rapport en moles est de 2:1 à 1,5:1.

8. Procédé selon une ou plusieurs des revendications 1 à 7, caractérisé en ce que la température de réaction pour la réaction du P₂O₃ est de 60 à 200 °C.

9. Procédé selon une ou plusieurs des revendications 1 à 8, caractérisé en ce que l'hydrolyse avec de l'eau est mise en oeuvre dans un rapport en moles de l'eau au P₂O₃ utilisé d'au moins 1:1 et à une température de 10 à 200 °C.

10. Procédé selon une ou plusieurs des revendications 1 à 9, caractérisé en ce que l'on met en oeuvre la réaction des composés de formule II et de P₂O₃ en présence d'un solvant organique.

11. Procédé selon la revendication 10, caractérisé en ce que le solvant organique est un solvant organique polaire inerte protique ou un solvant organique aprotique.
